# EUROPÄISCHE PATENTSCHRIFT

(11) **EP 0 534 413 B1**
(45) Veröffentlichungstag und Bekanntmachung des Hinweises auf die Patenterteilung: **02.10.1996**
(21) Anmeldenummer: 92116297.0
(22) Anmeldetag: 23.09.1992
(51) Int. Cl.: E05F 15/12, F16H 19/00, B66F 13/00

(54) **Betätigungsvorrichtung für einen Flügel eines Fensters, einer Tür, einer Lüftungsklappe oder dergleichen**
Actuator for a wing of a window, a door, a ventilator or the like
Dispositif de commande pour un battant d'une fenêtre, d'une porte, d'un clapet d'aération ou similaire

(30) Priorität: 24.09.1991 DE 4131762
(43) Veröffentlichungstag der Anmeldung: 31.03.1993
(73) Patentinhaber: Aug. Winkhaus GmbH & Co. KG, D-48291 Telgte (DE)
(72) Erfinder: Greisner, Paul, W-4404 Telgte (DE); Renz, Dieter, W-4530 Ibbenbüren (DE); Schwenk, Horst, Dr., W-4400 Münster (DE); Langner, Martin, W-4404 Telgte (DE)
(74) Vertreter: Prechtel, Jörg, Dipl.-Phys. Dr.

(56) Entgegenhaltungen:
- EP-A- 0 165 497
- DE-A- 2 344 859
- DE-A- 3 936 136
- GB-A- 466 786
- US-A- 2 045 261
- US-A- 2 048 131
- US-A- 5 006 766
- PATENT ABSTRACTS OF JAPAN vol. 1, no. 96 (M-033)1977

## Beschreibung

Die Erfindung betrifft eine Betätigungsvorrichtung zum Öffnen und Schließen eines Flügels eines Fensters, einer Tür, einer Lüftungsklappe oder dergleichen gemäß dem Oberbegriff des Anspruchs 1.

Eine Vorrichtung dieser Art ist bekannt (GB-A-466786). Die beiden lediglich einseitig abbiegbaren Ketten liegen im Bereich zwischen Flügel F und Blendrahmen F1 Rücken an Rücken aneinander an. Im dargestellten Ausführungsbeispiel sind beide Ketten an ihrer Rückseite jeweils mit einem flexiblen Band A4 versehen, um ein halbzylinderförmiges Teil A³ im Trennungsbereich der beiden Ketten vor Beschädigung durch Kanten der Kettenglieder zu schützen (Seite 3, Zeilen 10 bis 24). Eine unmittelbare gegenseitige Anlage der beiden Ketten A und A¹ oder gar eine Verkopplung beider Ketten wird hierdurch ausgeschlossen. Die beiden Ketten sind nicht gegeneinander versetzt.

Aufgrund der gegenseitigen rückseitigen Abstützung der beiden lediglich einseitig abbiegbaren Ketten ergibt sich an sich eine Selbststabilisierung des Kettenpaares bei Druckbelastung. Bei großen Öffnungsweiten des Flügels (bzw. der Tür oder Lüftungsklappe oder dergleichen) bzw. bei besonders großen Flügelgewichten besteht jedoch aufgrund von Fertigungsungenauigkeiten der Kettenglieder die Möglichkeit einer lokalen Verbiegung der einen oder anderen Kette aus der exakten Strecklage (= labile Gleichgewichtslage), wobei mit zunehmender Abbiegung aus der exakten Strecklage die Verformungstendenz der jeweiligen Kette unter Druckbeanspruchung rasch zunimmt.

Der Erfindung liegt die Aufgabe zugrunde, mit baulich einfachen Mitteln die Stabilität des Kraftübertragungsglieds zu erhöhen.

Diese Aufgabe wird durch die Merkmale des Anspruchs 1 gelöst. Die Rippen sowie die komplementären Ausnehmungen sind kostengünstig bereitstellbar ebenso wie die schwalbenschwanzartigen Steckverbindungen; dennoch ist guter gegenseitiger Ketteneingriff gewährleistet, so daß Kräfte, die beide Ketten senkrecht zur Kettenlängsrichtung voneinander wegzubewegen versuchen, unmittelbar von beiden Ketten aufgenommen werden. Eine unter entsprehend hoher Druckbeanspruchung auftretende lokale Abbiegung einer der beiden Ketten aus der exakten Strecklage, beispielsweise aufgrund eines "Toleranz-Ausreißers" eines der beteiligten Kettenglieder, wird in der Folge durch die Kopplung mit der anderen Kette bereits "im Keime erstickt". Aufgrund der Versetzung der beiden Ketten liegt einer Gelenkstelle zweier aufeinanderfolgender Kettenglieder der einen Kette stets ein fester Rückenbereich eines Kettenglieds der anderen Kette gegenüber. Gelenkbewegungen werden somit weiter reduziert. Bei einer Kette mit Kettenquerschnitt von ca. 10mm x 10mm lassen sich aufgrund der erfindungsgemäßen Doppelkettenanordnung ohne weiteres Öffnungsweiten im Bereich von ca. 400mm bei einer Zug-Druckkraft von ca. 500N realisieren. Die Kettenglieder können aus Stahl- und/oder Kunststoffgliedern bestehen. Die Rippen sowie die komplementären Ausnehmungen sind kostengünstig herstellbar; dennoch ist guter gegenseitiger Eingriff gewährleistet, selbst wenn die Rippen und die Ausnehmungen jeweils in Kettenlängsrichtung fluchtend angeordnet sind, so daß sich die Ketten an sich in Kettenlängsrichtung gegeneinander verschieben lassen. Die hierzu alternative schwalbenschwanzähnliche Eckverbindung verbessert den Zusammenhalt zwischen beiden Ketten weiter, da nunmehr Kräfte, die beide Ketten senkrecht zur Kettenlängsrichtung voneinander wegzubewegen versuchen, unmittelbar von den beiden Ketten aufgenommen werden. Die angegebene elastische Nachgiebigkeit ermöglicht dabei dennoch das Herstellen bzw. Lösen dieser Steckverbindung.

Aus der US-A-2048131 ist zwar eine Betätigungsvorrichtung zum Öffnen und Schließen eines Flügels eines Fensters bekannt; es wird jedoch lediglich eine einzige einseitig abbiegbare Kette eingesetzt. Das Problem einer zusätzlichen Stabilisierung eines an sich bereits selbst stabilisierenden Kettenpaares tritt hier nicht auf.

Die DE-A-23 44 859 befaßt sich mit einer Hubvorrichtung für Flurförderfahrzeuge, also mit einer mobilen Einrichtung mit Hubkräften im t-Bereich. Bei der Erfindung dagegen geht es um eine stationäre Betätigungsvorrichtung zum Öffnen und Schließen eines Fensters mit vergleichsweise geringen Hubkräften. Der Fertigungs- und Montageaufwand dieser extrem hoch belastbaren Spezialketten ist beträchtlich. Die nach gegenseitiger Trennung der beiden Ketten freiliegenden Hakenvorsprünge sind sehr störend.

Die US-A-2045261 zeigt ein Kraftübertragungsglied aus zwei jeweils für sich beidseitig abbiegbaren Ketten, die nur dann biegesteif sind, wenn sie seitlich über eine Nut-Feder-Verbindung miteinander verbunden sind und gleichzeitig ein Kettengliedversatz um ein halbes Glied vorgesehen ist. Von der abweichenden Funktion abgesehen, ist diese Anordnung für größere Druckbelastungen bzw. Öffnungsweiten nur bedingt geeignet, da die Doppelkette aufgrund der notwendigerweise seitlich nebeneinander anzuordnenden Kettenglieder einen ungünstig schmalen Querschnitt aufweist.

Der Anspruch 2 befaßt sich mit einer Maßnahme zur Erleichterung der Kettentrennung, nämlich durch Einsatz der bugartigen Spitze. Durch die Maßnahme gemäß Anspruch 3 wird ein Verhaken der Kettenglieder mit der Spitze verhindert.

Besonders bevorzugt ist der Einsatz der erfindungsgemäßen Betätigungsvorrichtung zum Öffnen und Schließen eines mit dem feststehenden Rahmen über ein Schwenkgelenk schwenkbar verbundenen Flügels. Für eine derartige Anordnung wird vorgeschlagen, daß die Antriebsvorrichtung am Flügel bzw. am Rahmen schwenkbar befestigt ist, mit Schwenkachse parallel zur Schwenkgelenkachse, und daß die beiden Ketten an der jeweiligen Befestigungsstelle mit dem Rahmen bzw. dem Flügel gelenkig verbunden sind mit gemeinsamer Gelenkachse ebenfalls parallel zur Schwenkgelenkachse. Je nach Art der Anbringung der Betätigungsvorrichtung bewegt sich bei der Öffnungs- und Schließbewegung die Gelenkachse oder die Schwenkachse längs eines entsprechenden Kreisbogens. Aufgrund der schwenkbaren Befestigung sowohl der Antriebsvorrichtung als auch der beiden Kettenenden, können sich Antriebsvorrichtung und Kraftübertragungsglied bei der Öffnungs- und Schließbewegung des Flügels stets längs einer Verbindungs-Geraden (= Sekante) zwischen der Schwenkachse und der Gelenkachse einstellen. Die beiden Ketten befinden sich somit stets in ihrer maximal auf Druck belastbaren geradlinigen Strecklage.

In Weiterbildung der Erfindung wird vorgeschlagen, daß die beiden Ketten an ihren Rückseiten derart ineinandergreifen, daß Kräfte in Kettenlängsrichtung von einer Kette auf die andere übertragbar sind. Zusätzlich können also auch in Längsrichtung der Kette wirkende Kräfte von einer Kette auf die andere Kette übertragen wezden. Dies ist dann von besonderem Vorteil, wenn zur Vereinfachung des Antriebs lediglich eine der beiden Ketten unmittelbar angetrieben wird. Aufgrund der erfindungsgemäßen Ausbildung werden die Antriebskräfte auf beide Ketten aufgeteilt.

Um eine einfache Art der Kettenbefestigung zu erhalten, wobei die versetzte Kettenanordnung ohne weiteres berücksichtigt werden kann, wird vorgeschlagen, daß die beiden Ketten an den beiden Befestigunzsstellen mit jeweils einem Ihrer Enden am Rahmen bzw. Flügel über ein beiden Ketten gemeinsames gabelartiges Koppelelement schwenkbar angebracht sind.

In einer sich durch besondere Stabilität und damit hohe Dauerstandfestigkeit auszeichnenden Ausführungsform der Erfindung ist vorgesehen, daß beide Ketten jeweils von einem Kettenrad antreibbar sind, welches jeweils in einen Abbiegeabschnitt der Kette eingreift. Beide Ketten werden somit zwar voneinander unabhängig aber in prinzipiell gleicher Weise angetrieben, so daß antriebsbedingte Verspannungen der beiden Ketten gegeneinander in aller Regel ausgeschlossen sind. Auch muß jedes Kettenantriebsrad lediglich die halbe Betätigungskraft aufbringen, was den Verschleiß dementsprechend reduziert.

Um einen relativ kostengünstig erhältlichen und wenig Einbauraum beanspruchenden, schnell laufenden Antriebsmotor mit relativ geringem Drehmoment einsetzen zu können, wird vorgeschlagen, daß beide Kettenräder jeweils mit einem Planetengetriebe versehen sind, und daß beide Planetengetriebe von einem gemeinsamen Antriebsmotor antreibbar sind. Die beiden Planetengetriebe sind verschleißarm, da sie lediglich die halbe Betätigungskraft erzeugen müssen.

Alternativ hierzu kann zur Reduzierung des Bauaufwands und damit der Herstellungskosten vorgesehen sein, daß lediglich eines der beiden Kettenräder mit einem Planetengetriebe versehen ist, welches von einem Antriebsmotor antreibbar ist, und daß das andere Kettenrad mit dem einen Kettenrad verkoppelt ist. Um die Gestehungskosten weiter zu reduzieren, ist in einer weiteren Alternative vorgesehen, daß lediglich eine der beiden Ketten über ein mit einem Antriebsmotor verbundenes Kettenrad antreibbar ist.

Um den Flügel in jeder beliebigen Einstellposition, insbesondere auch in geschlossenem Zustand, zuverlässig zu halten, wird vorgeschlagen, daß die Antriebsvorrichtung selbsthemmend ausgebildet ist. Dies wird bevorzugt durch ein selbsthemmendes Getriebe, am besten durch ein selbsthemmendes Schneckengetriebe erreicht, welches zwischen einem Antriebsmotor und einem Antriebsglied für eine der beiden Ketten oder für beide Ketten zwischengeschaltet ist.

Einfacher Aufbau mit zuverlässiger Führung der Kette innerhalb der Antriebsvorrichtung wird dadurch sichergestellt, daß die Antriebsvorrichtung wenigstens ein vorzugsweise aus Kunststoff bestehendes, plattenartiges Teil aufweist mit einem Führungskanal für eine der beiden Ketten. Besonders vorteilhaft ist es hierbei, wenn zwei übereinanderliegende, plattenartige Teile eingesetzt werden, deren miteinander fluchtende Kanäle einen allseitig umschlossenen Aufnahmekanal für die jeweilige Kette bilden. Da die plattenartigen Teile jeweils für sich keinen hohlen Kanal, sondern lediglich einseitig offene Kanäle bzw. Rinnen aufweisen, sind diese besonders kostengünstig herstellbar.

In Weiterbildung der Erfindung wird vorgeschlagen, daß das Planetengetriebe einen mit dem Kettenrad drehfest verbundenen Planetenradträger, ein mit einem Eingangszahnrad verbundenes Sonnenrad sowie eine in einem Planetengetriebegehäuse vorgesehene Innenumfangsverzahnung aufweist, wobei auf dem Planetenradträger drehbar angeordnete Planetenräder in die Innenumfangsverzahnung sowie in die Sonnenradverzahnung eingreifen. Dieses Planetengetriebe ist mechanisch stabil bei einfachem Aufbau. Bevorzugt ist hierbei vorgesehen, daß das Eingangszahnrad mit einem Schneckengetriebe verbunden ist, vorzugsweise über ein Stirnrad-Zwischengetriebe, und daß die Schnecke des Schneckengetriebes auf einer Motorwelle eines Antriebsmotors drehfest angebracht ist. Stabiler, kostengünstiger Aufbau ist dadurch gewährleistet, daß das Zwischengetriebe sowie das Planetengetriebegehäuse zwischen zwei Getriebegrundplatten angeordnet ist, und daß die Getriebegrundplatten über wenigstens drei Distanzbolzen voneinander in Abstand gehalten werden.

Die Erfindung betrifft schließlich ein Fenster oder eine Lüftungsklappe, insbesondere für Wintergarten oder Gewächshäuser oder Rauch-Wärme-Abzugs-Anlagen, mit einer Betätigungsvorrichtung der vorstehend beschriebenen Art.

Die Erfindung wird im folgenden an bevorzugten Ausführungsbeispielen anhand der Zeichnung erläutert. Es zeigt:
- Fig. 1: eine Draufsicht der erfindungsgemäßen Betätigungsvorrichtung (Schnitt nach Linie I-I in Fig. 7) bei zurückgezogenem Kraftübertragungsglied;
- Fig. 2: eine Schnittansicht entsprechend Fig. 1, jedoch mit ausgefahrenem Kraftübertragungsglied;
- Fig. 3: einen Detailschnitt durch das Kraftübertragungsglied nach Linie III-III in Fig. 2;
- Fig. 4: einen Detailschnitt entsprechend Fig. 3 einer anderen Ausführungsform des Kraftübertragungsglieds;
- Fig. 5: einen Detailschnitt nach Linie V-V in Fig. 2;
- Fig. 6: eine Draufsicht der Betätigungsvorrichtung im Schnitt nach Linie VI-VI in Fig. 7;
- Fig. 7: eine Vorderansicht der Betätigungsvorrichtung im Schnitt nach Linie VII-VII in Fig. 6; die Fig. 8 bis 12 einige Anwendungsbeispiele für die erfindungsgemäße Betätigungsvorrichtung, nämlich
- Fig. 8: eine Dachklappe;
- Fig. 9: ein Dachflächenfenster;
- Fig. 10: ein Kippfenster;
- Fig. 11: ein weiteres Kippfenster; und
- Fig. 12: ein nach außen öffnendes Kippfenster.

Die im nachfolgenden näher beschriebene Betätigungsvorrichtung dient dem Öffnen und Schließen eines Fensterflügels, einer Lüftungsklappe oder dergl. und zeichnet sich durch hohe Betätigungskraft, große Ausstellweite und kompakte Bauform aus. Sie wird daher vor allem in solchen Anwendungsfällen eingesetzt, bei denen eine unmittelbare manuelle Bedienung entweder gar nicht möglich ist (aufgrund schlechter Erreichbarkeit des Flügels) oder eine selbsttätige Flügelbetätigung gewünscht wird. Eine selbsttätige, ggf. automatische Betätigung, kommt zum Beispiel dann in Betracht, wenn eine zentrale Steuerung der Belüftung gewünscht wird. Dies ist beispielsweise bei Glashaussystemen, insbesondere Gewächshäusern, der Fall. Schließlich ist eine automatische Flügel- oder Klappenbetätigung bei den sog. Rauch-Wärme-Abzugs-Anlagen (RWA-Anlagen) erforderlich, die z.B. im Falle eines Brandes einen selbsttätigen Abzug des Rauches oder von Wärme veranlassen.

Die erfindungsgemäße Betätigungsvorrichtung wird in erster Linie zum Kippen oder Drehöffnen von mit dem jeweiligen Rahmen über ein Schwenkgelenk verbundenen Flügeln oder Klappen eingesetzt, da das Kraftübertragungsglied der Betätigungsvorrichtung als Ausstellvorrichtung dient, die den Flügel in der gewünschten Schwenkstellung hält, sowie gleichzeitig als Antriebsglied dient, um den Schwenkwinkel in der gewünschten Weise zu verändern. Diese Doppelfunktion wird durch die hohe mechanische Zug- und Druck-Steifigkeit des Kraftübertragungsglieds erreicht. Unter Umständen kommt auch eine Linearverschiebung des Flügels durch die Betätigungsvorrichtung in Betracht, wenn auch für derartige Anwendungsfälle im allgemeinen einfacher aufgebaute Antriebsvorrichtungen infrage kommen, beispielsweise unter Verwendung eines Zahnstangen-Ritzelantriebs.

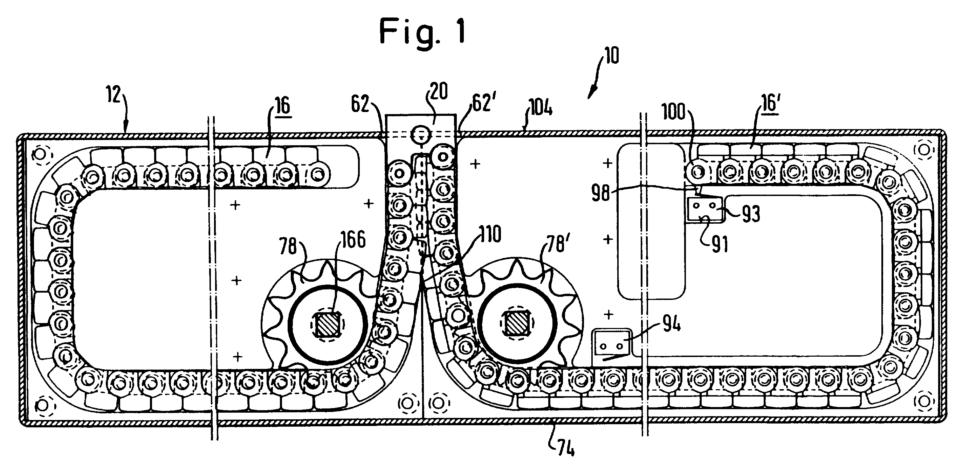

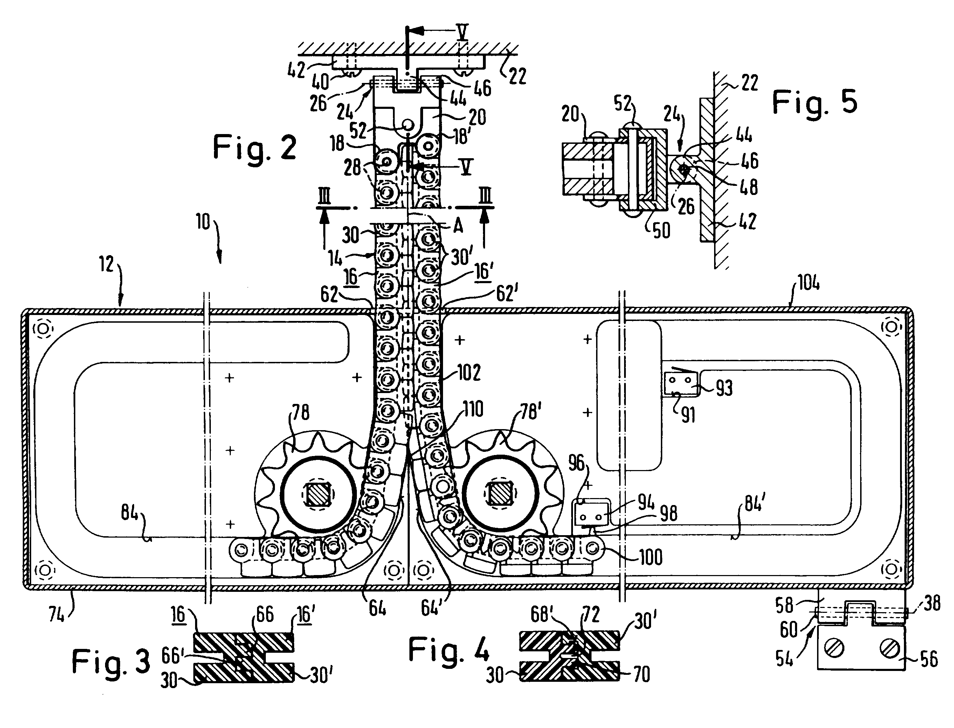

Die Betätigungsvorrichtung ist in den Figuren allgemein mit 10 bezeichnet. Sie besteht aus einer Antriebsvorrichtung 12 sowie einem Kraftübertragungsglied 14, welches von der Antriebsvorrichtung 12 angetrieben wird. Das Kraftübertragungsglied 14 besteht aus zwei zueinander in entgegengesetzten Richtungen lediglich einseitig abbiegbaren Ketten 16,16'. Die beiden Ketten 16,16' sind mit ihren beiden in den Fig. 1 und 2 obenliegenden Enden an zwei unmittelbar nebeneinanderliegenden Befestigungsstellen 18,18' an einem gabelartigen Koppelelement 20 befestigt. Dieses Koppelelement 20 wiederum ist am zu bewegenden Flügel 22 befestigt. Zumindest bei kleineren öffnungsweiten kommt eine starre Befestigung infrage. In vielen Fällen ist eine schwenkbare Befestigung jedoch vorzuziehen, um das Kraftübertragungsglied 14 von Biegemomenten in der entsprechenden Richtung freizuhalten.

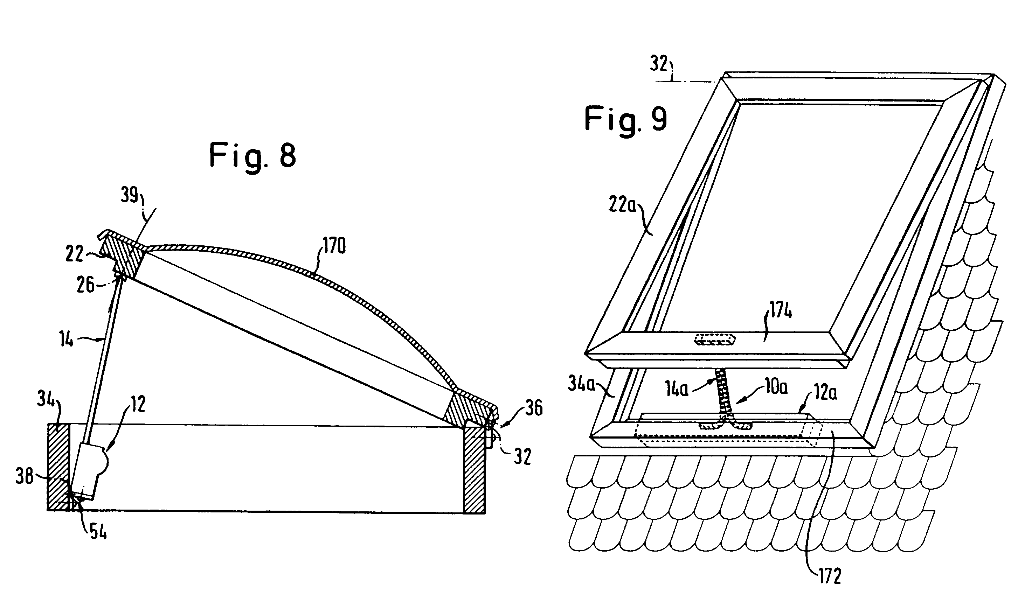

Hierzu ist ein in den Fig. 2 und 5 schematisch dargestelltes Schwenkgelenk 24 vorgesehen, welches eine Gelenkachse 26 festlegt. Diese Gelenkachse 26 verläuft senkrecht zu den (senkrecht zur Zeichenebene der Fig. 1 und 2 verlaufenden) Gelenkachsen 28 der Kettenglieder 30 der Ketten 16,16'. Wie in Fig. 8 angedeutet ist, verläuft die Gelenkachse 26 ferner parallel zu einer Schwenkgelenkachse 32 eines den Flügel 22 (hier Dachklappe) mit einem feststehenden Rahmen 34 verbindenden Schwenkgelenks 36.

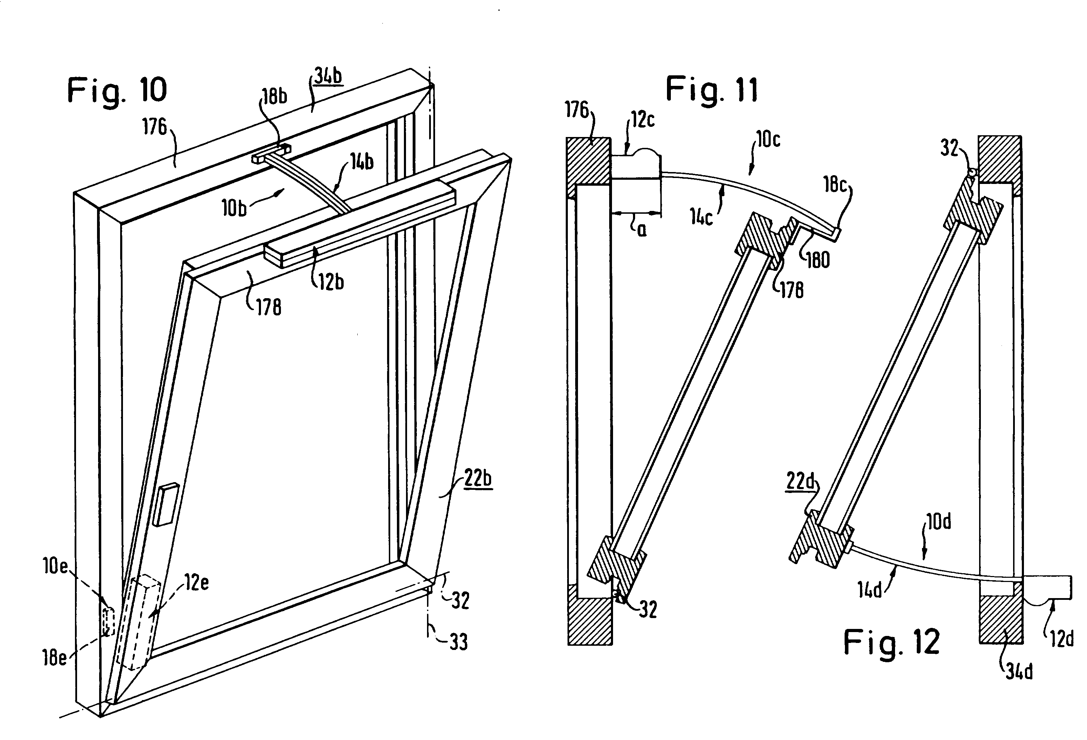

In entsprechender Weise ist auch die Antriebsvorrichtung 12 am Rahmen 34 schwenkbar befestigt mit Schwenkachse 38 parallel zu den Achsen 26 und 32. Aufgrund dieser Anordnung erreicht man, daß trotz der Bewegung der Befestigungsstellen 18,18' der Kettenenden längs eines Kreisbogens 39 um die Schwenkachse 36 während der Öffnungs- und Schließbewegung des Flügels 22 Kraftübertragungsglied 14 und Antriebvorrichtung 12 stets auf einer geraden Linie liegen, so daß von daher Biegemomente vom Kraftübertragungsglied ferngehalten werden. Bei einfacher aufgebauten Ausführungsformen, insbesondere bei relativ geringer Öffnungsweite des Flügels und/oder geringen Betätigungskräften, kann auch an eine starre Befestigung zumindest der Antriebsvorrichtung 12 am Rahmen bzw. am Flügel gedacht werden, wie dies in den Fig. 10 - 12 angedeutet ist. Die Ketten 16,16' des Kraftübertragungsglieds 14 werden in diesem Falle dementsprechend angenähert kreisförmig gebogen, was durch entsprechend elastische Ausbildung der Ketten (z.B. durch Verwendung von Kunststoffmaterial und/oder Vorsehen entsprechenden Kettengliederspiels) möglich gemacht wird. Diese Abbiegung liegt in einer die Kettenlängsrichtung A enthaltenden Ebene senkrecht zur Abbiegeebene (= Zeichnungsebene der Fig. 2) der einseitig abbiegbaren Ketten 16,16', so daß die gegenseitige Stützfunktion der Ketten unter einfachen Bedingungen nicht beeinträchtigt ist.

Zum Aufbau des Schwenkgelenks 24 zwischen den Kettenenden und dem Flügel sei nachgetragen, daß hierzu beispielsweise eine am Rahmen 22 über Befestigungsschrauben 40 angebrachte Befestigungsplatte 42 Verwendung finden kann, die ein Gelenkauge 44 trägt. Dieses Gelenkauge kann zwischen zwei entsprechenden kettenseitigen Gelenkaugen 46 angeordnet sein mit einem sämtliche Augen durchsetzenden, die Achse 26 definierenden Gelenkbolzen 48. Die kettenseitigen Gelenkaugen 46 können wiederum über ein beispielsweise gabelförmiges Teil 50 mit Hilfe eines Nietbolzens 52 am bereits erwähnten Koppelelement 20 angebracht sein.

Einen entsprechenden Aufbau kann auch das die Achse 38 definierende Gelenk 54 haben. In der nur schematischen Darstellung gemäß Fig. 2 ist ein entsprechendes rahmenseitiges Gelenkteil 56 sowie ein antriebsvorrichtungsseitiges Gelenkteil 58 angedeutet mit einem die Achse 38 definierenden und beide Teile gelenkig verbindenden Gelenkbolzen 60. Am in Fig. 2 linken Ende ist eine entsprechende, jedoch nicht dargestellte Anordnung vorgesehen. Es kommen natürlich auch andere Gelenkausbildungen infrage, beispielsweise in Form eines sog. Klavierbandes.

Von ihren beiden nebeneinanderliegenden Befestigungsstellen 18,18' ausgehend verlaufend die beiden Ketten 16,16' Rücken an Rücken bis zu jeweiligen Austrittsstellen 62,62', an denen sie aus der Antriebsvorrichtung 12 austreten (bzw. in diese eintreten). Beide Austrittsstellen 62,62' liegen ebenfalls unmittelbar nebeneinander, so daß beide Ketten 16,16' zwangsläufig zwischen Antriebsvorrichtung 12 und Innenbesfestigungsstellen 18,18' Rücken an Rücken in Strecklage gehalten werden, und zwar unabhängig davon, wie weit die Ketten 16,16' aus der Antriebsvorrichtung 12 herausgefahren sind. Da, wie bereits erwähnt, die beiden Ketten mit ihrer jeweiligen Abbiegeseite entgegengesetzten Rückseite in ihrer Strecklage aneinander anliegen, verhindern sie gegenseitig eine an sich mögliche Abbiegebewegung der jeweils anderen Kette.

Um den Zusammenhalt der beiden Ketten 16,16' weiter zu verbessern, insbesondere um geräuschfreien Lauf zu erreichen und auch Querkräfte in Richtung parallel zu den Gelenkachsen 28 der Kettenglieder 30 zwischen beiden Ketten 16,16' zur Erhöhung der Steifigkeit übertragen zu können, greifen beide Ketten 16,16' an ihren Rückseiten 64,64' ineinander ein. In einer einfach herstellbaren Ausführungsform gemäß Fig. 3 sind hierzu die Kettenglieder 30 der Kette 16 sowie die Kettenglieder 30' der Kette 16' mit zur Kettenlängsrichtung A parallel verlaufenden Rippen 66,66' versehen, die in zugeordnete komplementäre Ausnehmungen der jeweils anderen Kette eingreifen.

Um den Zusammenhalt zwischen beiden Ketten 16,16' noch weiter zu verbessern, kann in der in Fig. 4 angedeuteten alternativen Ausführungsform eine schwalbenschwanzähnliche Steckverbindung zwischen den Kettengliedern 30 und 30' vorgesehen sein. Diese besteht aus einer zur Kettenlängsrichtung A parallel verlaufenden hinterschnittenen Nut 68', beispielsweise im Kettenglied 30', sowie einer dem Nut-Querschnitt angepaßten Rippe 70 am jeweils anderen Kettenglied 30. Da die beiden Ketten 16,16' voneinander lösbar sein sollen durch Abbiegen der jeweiligen Kette in der für diese Kette zulässigen Abbiegerichtung (um die einzelnen Kettenstränge kompakt innerhalb der Antriebsvorrichtung 12 aufnehmen zu können), ist die Schwalbenschwanzverbindung gemäß Fig. 4 lösbar ausgebildet aufgrund dentsprechend elastischer Nachgiebigkeit der Steckverbindungsteile. Im dargestellten Ausführungsbeispiel ist die Rippe 70 durch einen zur Nut 68' hin offenen Längsschlitz 72 dementsprechend elastisch nachgiebig ausgebildet.

Zur weiteren Erhöhung der mechanischen Stabilität, insbesondere Kompressions-Belastbarkeit, des Kraftübertragungsglieds 14 sind die beiden Ketten 16,16' in ihrer Strecklage zwischen den Befestigungsstellen 18,18' und den Austrittsstellen 62,62' etwa um die Hälfte einer Teilungs-Länge eines Kettenglieds (= Abstand der Gelenkachsen 28) 30 gegeneinander in Richtung A versetzt. Dies wird dadurch erreicht, daß das erwähnte Koppelelement 20 dementsprechend versetzt angeordnete Befestigungsstellen 18,18' bereitstellt. Aufgrund dieser Versetzung liegt jeweils einem Gelenk aufeinanderfolgender Kettenglieder 30 bzw. 30' der einen Kette 16 bzw. 16' der (starre) Mittelabschnitt eines Kettenglieds 30' bzw. 30 der jeweils anderen Kette 16' bzw. 16 gegenüber. Dies erhöht die Kettensteifigkeit.

Die Antriebsvorrichtung 12 weist ein kastenartiges, allseits geschlossenes Gehäuses 74 auf mit lösbarem Gehäusedeckel 76, und zwar bevorzugt in Form eines Blechgehäuses. Das Gehäuse 74 beherbergt sowohl zwei angetriebene Kettenräder 78,78' zum Antrieb der beiden Ketten 16,16' samt elektrischem Antriebsmotor 80 und dazwischengeschaltetem Getriebe 82 als auch jeweils einen Aufnahmekanal 84 bzw. 84' für die beiden Ketten 16,16'.

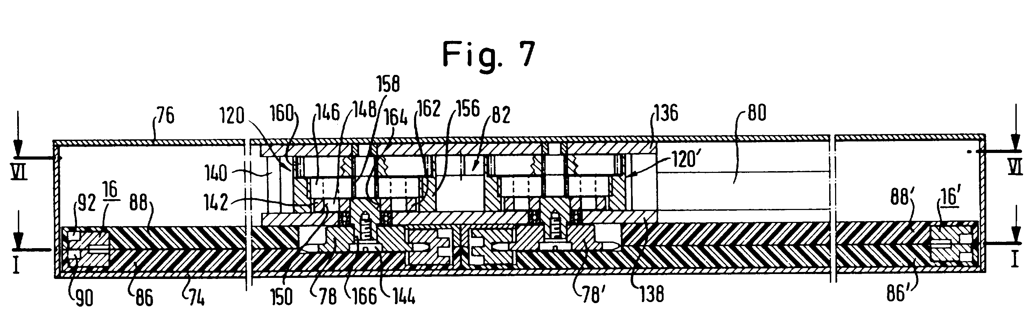

Der Aufnahmekanal 84 wird von zwei übereinanderliegenden plattenartigen Teile 86 und 88 gebildet. Diese weisen jeweils einen entsprechenden Führungskanal 90,92 auf mit einer der Kettenbreite entsprechenden Kanalbreite und einer der halben Kettenhöhe in Fig. 7 entsprechenden Kanalhöhe jeweils zuzüglich Gleittoleranz. Beide Kanäle 90,92 sind mit ihrer Kanalöffnung aufeinander zugewandt und liegen genau übereinander, so daß sie den allseitig umschlossenen Aufnahmekanal 84 für die Kette 16 bilden. Die beiden plattenartigen Teile 86,88 sind bevorzugt aus Kunststoff, so daß sich geringe Herstellungskosten sowie geringe Reibungsverluste ergeben. Der Kanal 84 ist gemäß Fig. 2 angenähert U-förmig, um eine relativ große Kettenlänge aufnehmen zu können.

Zur Bildung des Aufnahmekanals 84' für die andere Kette 16' sind zwei entsprechend geformte plattenartige Teile 86' und 88' vorgesehen. Am Ende des Aufnahmekanals 84' ist dieser mit einer seitlichen Ausweitung 91 versehen, in die ein Mikroschalter 93 eingebaut ist. Der Mikroschalter 93 gibt dann ein Signal ab, wenn die Kette 16' ihre Rückzugsstellung erreicht hat, um hierdurch den Antriebsmotor selbsttätig abstellen zu können. Die Rückzugsstellung ist in Fig. 1 angedeutet.

Ein entsprechender Mikroschalter 94 für die Ausfahr-Stellung der Kette 16' (maximale Öffnungsweite des Flügels) ist in einer entsprechenden Ausweitung 96 des Kanals 84' in der Nähe des Kettenrads 78' eingebaut. Dieser Mikroschalter 94 wird ebenso wie der Mikroschalter 93 durch eine seitlich vorstehende Nase 98 am letzten Kettenglied 100 betätigt, um den Motor bei geöffnetem Flügel selbsttätig abstellen zu können.

Die beiden Kanäle 84,84' führen die zugeordneten Ketten 16,16' an die Kettenräder 78 bzw. 78' heran und von diesen weg. Der Umschlingungswinkel beträgt jeweils etwas weniger als 90°. Anschließend an die beiden Kettenantriebsräder 78,78' gehen die beiden Aufnahmekanäle 84,84' ineinander über zur Bildung eines gemeinsamen Kanalabschnitts 102, der an der in Fig. 1 obenliegenden Längsseite 104 des in Richtung A länglichen Gehäuses endet und dort die Austrittsstellen 62,62' definiert. Der Querschnitt des Kanalabschnitts 102 entspricht dem Querschnitt des Kraftübertragungsglieds 14, d.h. dem Querschnitt der an ihren Rückseiten 64,64' aneinander anliegenden und ineinander gesteckten Ketten 16 und 16' (s. Fig. 3 bzw. Fig. 4). Aufgrund dieser geometrischen Anordnung wird also bei einem Herausfahren der Ketten 16,16' durch entsprechenden Antrieb der Kettenräder 78,78' aus der Rückzugsstellung gemäß Fig. 1 in Richtung zur Ausfahrstellung gemäß Fig. 2 erreicht, daß die beiden Ketten anschließend an die beiden Kettenräder 78,78' einander mehr und mehr angenähert werden, bis sie schließlich im Kanal 102 dementsprechend dicht aneinander anliegen.

Umgekehrt wird bei einem Zurückfahren der Ketten 16,16' eine Trennung der Kettenglieder 30,30' der beiden Ketten 16,16' voneinander erreicht. Um die Trennung zu erleichtern, sind die bereits erwähnten Rippen 66,66' an ihren Längsenden abgerundet, so daß ein Verhaken mit einer bugartigen Spitze 110 verhindert wird. Die bugartige Spitze 110 wird von den beim Zusammenlaufen der Kanäle 84 und 84' endenden, von den Kettenantriebsrädern 78,78' abgelegenen Führungskanalseitenwänden der plattenartigen Teile 86,88 bzw. 86',88' gebildet. Man erhält somit ein Zusammenführen bzw. Auseinanderziehen der Kettenglieder 30,30' der beiden Ketten 16,16' nach Art eines Reißverschlusses.

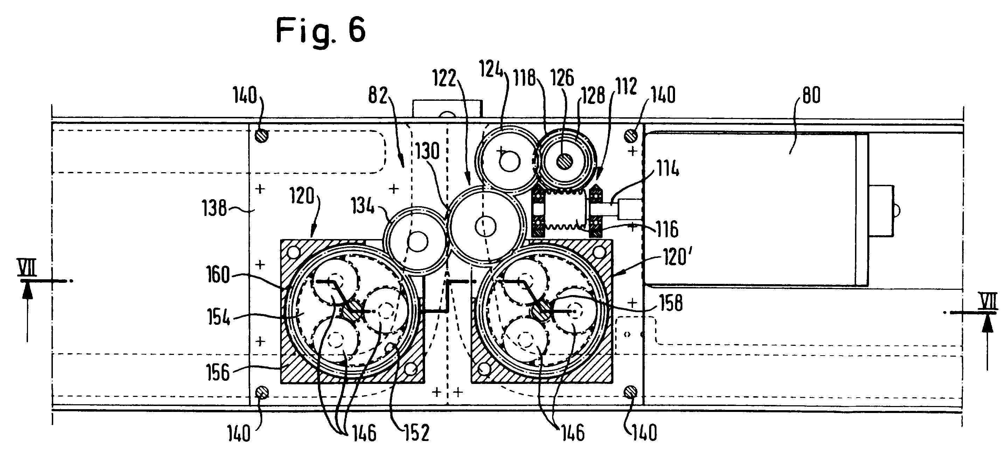

Das Getriebe 82 umfaßt ein Schneckengetriebe 112 mit auf einer Motorwelle 114 des Elektromotors 80 drehfest angebrachter Schnecke 116 und in die Schnecke eingreifendem Schneckenrad 118. Das Getriebe 82 umfaßt ferner jeweils ein Planetengetriebe 120,120' zum Antrieb des Kettenrads 78 bzw. des Kettenrads 78'. Ein Stirnrad-Zwischengetriebe 122 verbindet das Schneckengetriebe 112 mit beiden Planetengetrieben 120,120'. Das Zwischengetriebe 122 umfaßt ein Eingangs-Zahnrad 124, welches mit einem in Fig. 6 angedeuteten, auf der Schneckenradwelle 126 drehfest angebrachten Zahnrad 128 kämmt. Das Zahnrad 124 kämmt außerdem mit einem Zahnrad 130, welches zum einen das Schneckengetriebe 120' unmittelbar antreibt und zum anderen, über ein richtungsumkehrendes Zwischenzahnrad 134, das andere Planetengetriebe 120 antreibt.

Zur mechanisch stabilen Lagerung der Teile des Getriebes 82 sowie der beiden Zahnräder 78,78' mit der Möglichkeit eines schnellen und einfachen Einbaus bzw. Ausbaus sind zwei, die entsprechenden Lagerstellen enthaltende Getriebegrundplatten 136,138 vorgesehen, die über, im dargestellten Ausführungsbeispiel 4, Distanzbolzen 140 in erforderlichem Abstand voneinander gehalten werden.

Die beiden Planetengetriebe 120,120' haben gleichen Aufbau. Mit dem jeweiligen Kettenrad 78 bzw. 78' ist ein Planetenradträger 142 drehfest verbunden (mit Hilfe einer koaxialen Befestigungsschraube 144, s. Fig. 7). Der Planetenradträger 142 trägt drei Planetenräder 146, die über Achsstummel 148 in entsprechenden Ausnehmungen 150 des Planetenradträgers 142 drehbar gelagert sind. Die Planetenräder 146 greifen in eine ortsfeste Innenumfangsverzahnung 152 ein. Die Innenumfangsverzahnung 152 ist in einer Planetengetriebekammer 154 vorgesehen, die wiederum in einem Planetengetriebegehäuse 156 ausgeformt ist. Das Planetengetriebegehäuse 156 kann vorteilhafterweise von einem entsprechend ausgeformten Kunststoffblock oder Zink-Druckguß-Block gebildet sein, welcher zwischen die beiden Getriebegrundplatten 136,138 eingespannt ist.

Die Planetenräder 146 kämmen ferner mit einer Sonnenradverzahnung 158 eines Sonnenrades, welches drehfest mit einem koaxialen Eingangszahnrad 160 verbunden ist. Das Eingangszahnrad 160 wiederum kämmt mit dem Zahnrad 134 (Planetengetriebe 120) bzw. mit dem Zahnrad 130 (Planetengetriebe 120').

Zur weiteren Reduzierung der Herstellungskosten ist der Planetenradträger 142 zweiteilig ausgebildet, mit einer die Ausnehmung 150 tragenden Kreisscheibe 162 mit Innenvierkantausnehmung 164 sowie einem Antriebsdorn 166 mit in den Innenvierkant 164 eingreifendem Außenmehrkant und Einschraubgewinde für die Befestigungsschraube 144.

Aufgrund der mehrfachen Untersetzung des Getriebes 82 über das Schneckengetriebe 112, das Zwischengetriebe 122 und die jeweiligen Planetengetriebe 120 bzw. 120' kann ein relativ kleiner und damit kostengünstiger, jedoch schnell laufender Antriebsmotor 80 eingesetzt werden bei hohem Antriebsmoment der Zahnräder 78,78'. Auch ist das Getriebe 82 ohne weiteres selbsthemmend, insbesondere aufgrund des Schneckengetriebes 112, so daß sichergestellt ist, daß der Flügel in der jeweiligen Öffnungseinstellung sicher hält sowie seine Schließlage auch bei hohen Winddrücken beibehält.

Die vorstehend beschriebene Betätigungsvorrichtung 10 ist von daher sehr vielseitig einsetzbar. Dies soll im folgenden an einigen Anwendungsbeispielen erläutert werden. Die bereits vorstehend erläuterte Fig. 8 zeigt den Anwendungsfall bei einer Dachklappe. Der Flügel 22 kann je nach Anwendungsfall eine durchsichtige oder durchscheinende Glaskuppel 170 tragen oder ein undurchsichtiges Dachelement. In letzterem Falle dient die Dachklappe lediglich der Lüftung, ggf. als Rauch- und Wärmeabzug.

Ein weiterer in Fig. 9 angedeuteter Anwendungsbereich ist der bei Dachflächenfenstern. Man erkennt einen entsprechend der Dachneigung schräg verlaufenden, feststehenden Blendrahmen 34a sowie einen Fensterflügel 22a mit horizontaler Schwenkachse 32 im Bereich des oberen Blendrahmenholms bzw. Flügelrahmenholms. Die Betätigungsvorrichtung 10a befindet sich folgerichtig im Bereich der unteren horizontalen Rahmenholme, d.h. an dem der Drehachse 32 entgegengesetzten Ende des Fensters. Aus Platzgründen ist hier die Antriebsvorrichtung 12a am Blendrahmenholm 172 angebracht und das freie Ende des Kraftübertragungsglieds 14a am Flügelrahmenholm 174. Je nach der erforderlichen Maximallänge des Kraftübertragungsglieds 14a zum Öffnen des Fensters und der benötigten maximalen Druckkraft des Kraftübertragungsglieds 14a, erfolgt eine schwenkbare Befestigung von Antriebsvorrichtung 12a und Kraftübertragungsglied 14a am jeweiligen Rahmenholm 172,174 entsprechend Fig. 8 oder eine starre Befestigung zumindest der Antriebsvorrichtung 12a. Letztere Anbringungsweise hat zur Folge, daß das Kraftübertragungsglied bei geöffnetem Flügel kreisbogenartig abgebogen wird, wie in den Anwendungsfällen gemäß Fig. 10 und 12 angedeutet ist.

Gemäß Fig. 10 wird die Betätigungsvorrichtung 10b bei einem herkömmlichen Kippfenster eingesetzt, also im Bereich der oberen Rahmenholme 176,178 von Blendrahmen 34b bzw. Flügel 22b. Die horizontale Schwenkgelenkachse 32 (= Kippachse) des Fensters befindet sich dagegen am unteren Fensterende. Bei dem dargestellten Ausführungsbeispiel ist die Antriebsvorrichtung 12b am oberen Flügelrahmenholm 178 angebracht und das freie Ende des Antriebsglieds 14b am Blendrahmenholm 176. Im Falle eines Dreh-Kipp-Fensters mit vertikaler Drehachse 33 wird vor dem Drehöffnen das freie Ende des Antriebsglieds vom Blendrahmen 17b an der Befestigungsstelle 18b momentan gelöst, und zwar manuell ggf. mit Hilfe eines Treibstangenbeschlags, oder motorisch mittels Stellmotor. Prinzipiell kann die Betätigungsvorrichtung auch zum Dreh-Öffnen und -Schließen eingesetzt werden, insbesondere durch Anbringung einer weiteren Betätigungsvorrichtung 10e an den drehachsenfernen Vertikal-Holmen mit Antriebsvorrichtung 12e und an der Befestigungsstelle 18e lösbarem Antriebsglied.

Im Ausführungsbeispiel gemäß Fig. 11 sind die Befestigungsstellen im Vergleich zu Fig. 10 gegeneinander vertauscht. Auch hier handelt es sich um ein Kippfenster mit untenliegender Achse 32. Die Betätigungsvorrichtung 10c befindet sich am oberen Fensterende, wobei die Antriebsvorrichtung 12c vom oberen Blendrahmenholm 176 in das Rauminnere hinein absteht. Zur Berücksichtigung des Überstands a der Antriebsvorrichtung 12c nach innen über den Blendrahmen ist die Befestigungsstelle 18c des Antriebsglieds 14c am oberen Flügelrahmenholm 178 dementsprechend nach innen verlagert unter Zuhilfenahme eines angenähert im Querschnitt Z-förmigen Abstandshalters 180.

Die Ausführungsform gemäß Fig. 12 zeigt den Einsatz der Betätigungsvorrichtung 10d bei einem nach außen öffnenden Kippflügelfenster mit Kippachse 32 am oberen Fensterende. Da in diesem Falle die Antriebsvorrichtung 12d auf der von der Öffnungsrichtung entgegengesetzten Seite des Blendrahmens 34d angebracht werden kann, besteht keine Notwendigkeit mehr für den Abstandshalter 180. Das Kraftübertragungsglied 10d kann unmittelbar am Flügel 22d befestigt werden.

Um bei Ausfall z.B. des Antriebsmotors eine Notfunktion der Betätigungsvorrichtung zu gewährleisten, kann eine Notbetätigung vorgesehen sein, insbesondere in Form einer mit dem Getriebe 82 wahlweise verkoppelbaren Handkurbel.

## Patentansprüche

1. Betätigungsvorrichtung zum Öffnen und Schließen eines Flügels (22) eines Fensters, einer Tür, einer Lüftungsklappe oder dergleichen, umfassend
ein den Flügel (22) mit einem feststehenden Rahmen (34) verbindendes Kraftübertragungsglied (14) sowie eine am Flügel oder Rahmen (34) angeordnete Antriebsvorrichtung (12) für das Kaftübertragungsglied (14),
wobei das Kraftübertragungsglied (14) eine nur einseitig abbiegbare Kette (16) umfaßt, deren Glieder (30) hierzu derart miteinander gelenkig verbunden sind, daß die Kette (16) aus einer geradlinigen Strecklage in einer zu den Gelenkachsen (28) senkrechten Ebene lediglich nach einer Seite, der Abbiegeseite, hin abbiegbar ist,
wobei die Kette (16) zwischen einer Austrittsstelle (62) der Antriebsvorrichtung (12) und einer Befestigungsstelle (18) am Rahmen bzw. am Flügel (22) in Strecklage verläuft und wobei das Kraftübertragungsglied (14) von zwei nur einseitig und zwar in zueinander entgegengesetzten Richtungen abbiegbaren Ketten (16, 16') gebildet ist, deren Befestigungsstellen (18, 18') und Austrittsstellen (62, 62') jeweils unmittelbar nebeneinander liegen, so daß die beiden Ketten (16, 16') jeweils mit ihrer von der jeweiligen Abbiegeseite abgewandten Rückseite (64, 64') zwischen Befestigungsstelle (18, 18') und Austrittsstelle (62, 62') unmittelbar aneinander anliegen,
wobei die beiden Ketten (16, 16') innerhalb der Antriebsvorrichtung durch Abbiegen zur jeweiligen Abbiegeseite hin voneinander getrennt werden,
**dadurch gekennzeichnet**,
daß die beiden Ketten in der Strecklage zwischen den Befestigungsstellen (18, 18') und den Austrittstellen (62, 62') gegeneinander versetzt angeordnet sind und daß die Kettenglieder (30, 30') wenigstens einer der beiden Ketten (16, 16') an ihrer Rückseite (64, 64') mit zur Kettenlängsrichtung (A) parallel verlaufenden Rippen (66, 66') versehen sind, die in der Strecklage der beiden Ketten (16, 16') zwischen den Befestigungsstellen (18, 18') und den Austrittstellen (62, 62') in zugeordnete komplementäre Ausnehmungen der jeweils anderen Kette eingreifen oder
daß die Kettenglieder (30, 30') der beiden Ketten (16, 16') zwischen den Befestigungsstellen (16, 16') und den Austrittstellen (62, 62') über schwalbenschwanzähnliche Steckverbindungen miteinander verbunden sind jeweils mit einer zur Kettenlängsrichtung parallel verlaufenden hinterschnittenen Nut (68') im Kettenglied einer der beiden Ketten (16', 16) und einer dem Nut-Querschnitt angepaßten Rippe (70) am Kettenglied anderen Kette (16, 16'), wobei die Seitenwände der Nut und/oder die Rippe (70) zum Herstellen und Lösen der Steckverbindung elastisch nachgiebig ausgebildet sind.

2. Betätigungsvorrichtung nach Anspruch 1, dadurch gekennzeichnet, daß zur Erleichterung der Kettentrennung eine zwischen beiden Ketten (16, 16') eingreifende bugartige Spitze (110) vorgesehen ist.

3. Betätigungsvorrichtung nach Anspruch 2, dadurch gekennzeichnet, daß die Längsenden der Rippen (66, 66') abgerundet sind.

4. Betätigungsvorrichtung nach einem der vorhergehenden Ansprüche, dadurch gekennzeichnet, daß die beiden Ketten (16, 16') gegeneinander um die halbe Länge eines Kettenglieds (30, 30') versetzt angeordnet sind.

5. Betätigungsvorrichtung nach einem der vorhergehenden Ansprüche zum Öffnen und Schließen eines mit dem feststehenden Rahmen (34) über ein Schwenkgelenk (36) schwenkbar verbundenen Flügels (22),
**dadurch gekennzeichnet**,
daß die Antriebsvorrichtung (12) am Flügel bzw. am Rahmen (34) schwenkbar befestigt ist, mit Schwenkachse (38) parallel zur Schwenkgelenkachse (32,33), und daß die beiden Ketten (16,16') an der jeweiligen Befestigungsstelle (18,18') mit dem Rahmen bzw. dem Flügel (22) gelenkig verbunden sind mit gemeinsamer Gelenkachse (26) ebenfalls parallel zur Schwenkgelenkachse (32).

6. Betätigungsvorrichtung nach einem der vorhergehenden Ansprüche,
**dadurch gekennzeichnet**,
daß die beiden Ketten (16,16') an ihren Rückseiten derart ineinandergreifen, daß Kräfte in Kettenlängsrichtung (A) von einer Kette (16,16') auf die andere (16,16') übertragbar sind.

7. Betätigungsvorrichtung nach einem der vorhergehenden Ansprüche,
**dadurch gekennzeichnet**,
daß die beiden Ketten in der Strecklage zwischen den Befestigungsstellen (18,18') und den Austrittsstellen (62,62') gegeneinander entsprechend der halben Länge eines Kettenglieds (30,30') versetzt angeordnet sind,

8. Betätigungsvorrichtung nach Anspruch 7,
**dadurch gekennzeichnet**,
daß die beiden Ketten (16,16') an den beiden Befestigungsstellen (18,18') mit jeweils einem ihrer Enden am Rahmen bzw. Flügel (22) über ein beiden Ketten (16,16') gemeinsames gabelartiges Koppelelement (20) schwenkbar angebracht sind.

9. Betätigungsvorrichtung nach einem der vorhergehenden Ansprüche,
**dadurch gekennzeichnet**,
daß beide Ketten (16,16') jeweils von einem Kettenrad (78,78') antreibbar sind, welches jeweiis in einen Abbiegeabschnitt der Kette (16,16') eingreift.

10. Betätigungsvorrichtung nach einem der vorhergehenden Ansprüche,
**dadurch gekennzeichnet**,
daß beide Kettenräder (78,78') jeweils mit einem Planetengetriebe (120,120') versehen sind, und daß beide Planetengetriebe von einem gemeinsamen Antriebsmotor (80) antreibbar sind.

11. Betätigungsvorrichtung nach Anspruch 9,
**dadurch gekennzeichnet**,
daß lediglich eines der beiden Kettenräder mit einem Planetengetriebe versehen ist, welches von einem Antriebsmotor antreibbar ist, und daß das andere Kettenrad mit dem einen Kettenrad verkoppelt ist.

12. Betätigungsvorrichtung nach einem der Ansprüche 1 bis 8,
**dadurch gekennzeichnet**,
daß lediglich eine der beiden Ketten über ein mit einem Antriebsmotor verbundenes Kettenrad antreibbar ist.

13. Betätigungsvorrichtung nach einem der vorhergehenden Ansprüche,
**dadurch gekennzeichnet**,
daß die Antriebsvorrichtung (12) selbsthemmend ausgebildet ist.

14. Betätigungsvorrichtung nach Anspruch 13, gekennzeichnet durch ein selbsthemmendes Getriebe (82), vorzugsweise selbsthemmendes Schneckengetriebe (112), zwischen einem Antriebsmotor (80) und einem Antriebsglied für eine der beiden Ketten oder für beide Ketten (16,16').

15. Betätigungsvorrichtung nach einem der vorhergehenden Ansprüche,
**dadurch gekennzeichnet**,
daß die Antriebsvorrichtung (12) wenigstens ein vorzugsweise aus Kunststoff bestehendes, plattenartiges Teil (86,86',88,88') aufweist mit einem Führungskanal (90,92) für eine der beiden Ketten (16,16').

16. Betätigungsvorrichtung nach Anspruch 15,
**gekennzeichnet** durch zwei übereinanderliegende plattenartige Teile (86,88;86'88'), deren miteinander fluchtende Kanäle (90,92) einen allseitig umschlossenen Aufnahmekanal (84) für die jeweilige Kette (16,16') bilden.

17. Betätigungsvorrichtung nach einem der vorhergehenden Ansprüche,
**dadurch gekennzeichnet**,
daß das Planetengetriebe (120,120') einen mit dem Kettenrad (78,78') drehfest verbundenen Planetenradträger, (142) ein mit einem Eingangszahnrad (160) verbundenes Sonnenrad sowie eine in einem Planetengetriebegehäuse (156) vorgesehene Innenumfangsverzahnung (152) aufweist, wobei auf dem Planetenradträger (142) drehbar angeordnete Planetenräder (146) in die Innenumfangsverzahnung (152) sowie an die Sonnenradverzahnung (158) eingreifen.

18. Betätigungsvorrichtung nach Anspruch 17,
**dadurch gekennzeichnet**,
daß das Eingangszahnrad (118) mit einem Schneckengetriebe (112) verbunden ist, vorzugsweise über ein Stirnrad-Zwischengetriebe (122).

19. Betätigungsvorrichtung nach Anspruch 18,
**dadurch gekennzeichnet**,
daß die Schnecke (116) des Schneckengetriebes (112) auf einer Motorwelle (114) eines Antriebsmotors (80) drehfest angebracht ist.

20. Betätigungsvorrichtung nach Anspruch 19,
**dadurch gekennzeichnet**,
daß das Zwischengetriebe (122) sowie das Planetengetriebegehäuse (156) zwischen zwei Getriebegrundplatten (136,138) angeordnet ist.

21. Betätigungsvorrichtung nach Anspruch 20,
**dadurch gekennzeichnet**,
daß die Getriebegrundplatten (136,138) über wenigstens drei Distanzbolzen (140) voneinander in Abstand gehalten werden.

22. Fenster oder Lüftungsklappen, insbesondere für Wintergarten oder Gewächshäuser oder Rauch-Wärme-Abzugs-Anlage mit einer Betätigungsvorrichtung (10) nach einem der vorhergehenden Ansprüche.

23. Dreh-Kipp-Fenster mit wenigstens einer Betätigungsvorrichtung (10b,10e) nach einem der vorhergehenden Ansprüche.

24. Dreh-Kipp-Fenster nach Anspruch 23,
**dadurch gekennzeichnet**,
daß die Betätigungsvorrichtung (10b,10e) zum Kipp-Öffnen und -Schließen oder zum Dreh-Öffnen und -Schließen vorgesehen ist und daß das Kraftübertragungsglied (14b) an der Befestigungsstelle (18b,18e) lösbar ausgebildet ist.

## Claims

1. An actuating device for opening and closing the wing (22) of a window, door, ventilator or the like, comprising a transmission member (14) connecting the wing (22) to the stationary frame (34) and a drive device (12), arranged on the wing or frame (34), for the transmission member (14), the transmission member (14) comprising a chain (16) which will bend only one way and whose links (30) are connected articulatedly with each other such that the chain (16) may be deflected out of a straight line only to one side, the deflection side, in a plane perpendicular to the axes (28) of articulation, the chain (16) extending straight out from its point (62) of emergence from the drive device (12) to its point (18) of attachment to the frame or wing (22), the transmission member (14) being formed of two chains (16, 16') which will each bend only to one side, specifically in mutually opposing directions, their points (18, 18') of attachment and points (62, 62') of emergence lying directly adjacent, such that the two chains (16, 16') rest with their backs (64, 64'), remote from the respective deflection side, directly against each other between the points (18, 18') of attachment and the points (62, 62') of emergence, the two chains (16, 16') being separated from each other within the drive device by bending towards the respective deflection sides, characterised in that the two chains extended between the points (18, 18') of attachment and the points (62, 62') of emergence are staggered with respect to each other in that the chain links (30, 30') of at least one of the two chains (16, 16') are provided on their backs (64, 64') with ridges (66, 66') extending parallel with the longitudinal direction (A) of the chain, which ridges (66, 66') engage, when the two chains (16, 16') are extending straight between the points (18, 18') of attachment and the points (62, 62') of emergence, in associated complementary recesses in the other chain or in that the chain links (30, 30') of the two chains (16, 16') are connected together, between the points (18, 18') of attachment and the points (62, 62') of emergence, via dovetail-type plug-in connections, these each comprising an undercut groove (68'), extending in parallel with the longitudinal direction of the chain, in the link of one of the two chains (16', 16) and a ridge (70) conformed to the groove cross-section on the chain links of the other chain (16, 16'), the side walls of the groove and/or the ridge (70) being elastically resilient so as to produce and release the plug-in connection.

2. An actuating device according to claim 1,
characterised in that a nose-type tip (110) engaging between the two chains (16, 16') is provided to ease separation of the chains.

3. An actuating device according to claim 2,
characterised in that the longitudinal ends of the ridges (66, 66') are rounded off.

4. An actuating device according to any one of the preceding claims, characterised in that the two chains (16, 16') are staggered with respect to each other by half the length of one chain member (30, 30').

5. An actuating device according to any one of the preceding claims, for opening and closing a wing (22) connected pivotally by means of a pivoting articulation (36) with the stationary frame (34), characterised in that the drive device (12) is attached pivotally on the wing or frame (34), with its pivoting axis (38) parallel with the axis of pivoting articulation (32, 33) and in that the two chains (16, 16') are connected articulatedly to the respective attachment points (18, 18') on the frame or the wing (22) on a common axis of articulation (26) which is likewise parallel with the axis of pivoting articulation (32).

6. An actuating device according to any one of the preceding claims, characterised in that the backs of the two chains (16, 16') interlock in such a way that forces in the longitudinal direction (A) of one chain (16, 16') may be transmitted to the other (16, 16').

7. An actuating device according to any one of the preceding claims, characterised in that, when extended between the points (18, 18') of attachment and the points (62, 62') of emergence, the two chains are staggered with respect to each other by half the length of a chain link (30, 30').

8. An actuating device according to claim 7,
characterised in that the two chains (16, 16') are attached to the two points of attachment (18, 18') so as to be capable of pivoting, each with one of its ends against the frame or the wing (22), by means of a forked coupling member (20) common to the two chains (16, 16').

9. An actuating device according to any one of the preceding claims, characterised in that each chain (16, 16') may be driven by a chain wheel (78, 78'), which engages in a bent portion of the chain (16, 16').

10. An actuating device according to any one of the preceding claims, characterised in that each chain wheel (78, 78') is provided with a planetary gear (120, 120') and in that both planetary gears may be driven by a common drive motor (80).

11. An actuating device according to claim 9,
characterised in that only one of the two chain wheels is provided with a planetary gear, which may be driven by a drive motor, and in that the other chain wheel is coupled with the one chain wheel.

12. An actuating device according to any one of claims 1 to 8, characterised in that only one of the two chains may be driven by means of a chain wheel connected with a drive motor.

13. An actuating device according to any one of the preceding claims, characterised in that the drive device (12) is of self-locking construction.

14. An actuating device according to claim 13,
characterised by a self-locking gear (82), preferably a self-locking worm gear (112), between a drive motor (80) and a drive member for one of the two chains or for both chains (16, 16').

15. An actuating device according to any one of the preceding claims, characterised in that the drive device (12) comprises at least one, preferably plastics, plate-type component (86, 86', 88, 88') with a guide channel (90, 92) for one of the two chains (16, 16').

16. An actuating device according to claim 15,
characterised by two superposed plate-type components (86, 88, 86', 88'), whose mutually aligned channels (90, 92) form a receiving channel (84), enclosed on all sides, for the respective chain (16, 16').

17. An actuating device according to any one of the preceding claims, characterised in that the planetary gear (120, 120') comprises a planetary wheel support (142) connected for rotation with the chain wheel (78, 78'), a sun wheel connected with an intake cogwheel (160) and a planetary gear housing (156) provided with teeth (152) around its inner circumference, planetary wheels (146) arranged rotatably on the planetary gear support (142) engaging in the inner circumferential teeth (152) as well as the sun wheel teeth (158).

18. An actuating device according to claim 17,
characterised in that the intake cogwheel (118) is connected with a worm gear (112), preferably by means of an intermediate spur gear (122).

19. An actuating device according to claim 18,
characterised in that the worm (116) of the worm gear (112) is attached for rotation to the motor shaft (114) of a drive motor (80).

20. An actuating device according to claim 19,
characterised in that the intermediate gear (122) and the planetary gear housing (156) are arranged between two gear base plates (136, 138).

21. An actuating device according to claim 20,
characterised in that the gear base plates (136, 138) are held at a distance from each other by at least three spacer bolts (140).

22. A window or ventilator, especially for conservatories or greenhouses or smoke-and-heat exhaust systems with an actuating device (10) according to any one of the preceding claims.

23. A swivel-and-tilt window comprising at least one actuating device (10b, 10e) according to any one of the preceding claims.

24. A swivel-and-tilt window according to claim 23, characterised in that the actuating device (10b, 10e) is provided for tilting it open and closed or swivelling it open and closed and in that the transmission member (14b) is constructed so as to be releasable at the point (18b, 18e) of attachment.

## Revendications

1. Dispositif d'actionnement pour l'ouverture et la fermeture d'un vantail (22) d'une fenêtre, d'une porte, d'un volet d'aération ou similaire, comportant un organe de transmission de force (14), reliant le vantail (22) à un cadre (34) fixe, ainsi qu'un dispositif d'entraînement (12), placé sur le vantail ou le cadre (34) pour l'organe de transmission de force (14),
dans lequel l'organe de transmission de force (14) comprend une chaîne (16) pouvant être pliée d'un seul côté seulement, dont les maillons (30) sont reliés à cet effet entre eux de manière articulée, de telle sorte que la chaîne (16) puisse être pliée à partir d'une position étirée rectiligne dans un plan perpendiculaire aux axes d'articulation (28), uniquement vers un côté, à savoir le côté de pliage,
dans lequel la chaîne (16) s'étend en position étirée entre un point de sortie (62) du dispositif d'entraînement (12) et un point de fixation (18) sur le cadre ou le vantail (22) et dans lequel l'organe de transmission de force (14) est formé par deux chaînes (16, 16') pouvant être repliées d'un seul côté seulement et ce dans des directions opposées l'une à l'autre, dont les points de fixation (18, 18') et les points de sortie (62, 62') sont directement juxtaposés, de sorte que les deux chaînes (16, 16') s'appliquent directement l'une contre l'autre avec leurs faces arrières (64, 64') tournées à l'opposé du côté de pliage respectif, entre le point de fixation (18, 18') et le point de sortie (62, 62'),
dans lequel les deux chaînes (16, 16') sont séparées l'une de l'autre à l'intérieur du dispositif d'entraînement par pliage vers le côté de pliage respectif,
caractérisé
en ce que les deux chaînes en position étirée sont disposées décalées l'une par rapport à l'autre entre les points de fixation (18, 18') et les points de sortie (62, 62') et en ce que les maillons de chaîne (30, 30') d'au moins l'une des deux chaînes (16, 16') sont pourvus sur leur face arrière (64, 64') de nervures (66, 66') s'étendant parallèlement à la direction longitudinale (A) des chaînes, qui dans la position étirée des deux chaînes (16, 16'), entre les points de fixation (18, 18') et les points de sortie (62, 62'), s'engagent dans des évidements complémentaires associés de l'autre chaîne ou
en ce que les maillons de chaîne (30, 30') des deux chaînes (16, 16') entre les points de fixation (16, 16') et les points de sortie (62, 62'), sont reliés entre eux par des assemblages à emboîtement à queue d'aronde avec une rainure (68') détalonnée, parallèle à la direction longitudinale de la chaîne, dans le maillon de chaîne de l'une des deux chaînes (16, 16') et une nervure (70) adaptée à la section transversale de la rainure, sur le maillon de chaîne de l'autre chaîne (16, 16'), les parois latérales de la rainure et/ou la nervure (70) étant élastiquement souples pour la réalisation et la suppression de l'assemblage par emboîtement.

2. Dispositif d'actionnement selon la revendication 1, caractérisé en ce que pour faciliter la séparation de la chaîne il est prévu une pointe (110) en étrier s'engageant entre les deux chaînes (16, 16').

3. Dispositif d'actionnement selon la revendication 2, caractérisé en ce que les extrémités longitudinales des nervures (66, 66') sont arrondies.

4. Dispositif d'actionnement selon l'une des revendications précédentes, caractérisé en ce que les deux chaînes (16, 16') sont décalées l'une par rapport à l'autre de la moitié de la longueur d'un maillon de chaîne (30, 30').

5. Dispositif d'actionnement selon l'une des revendications précédentes pour l'ouverture et la fermeture d'un vantail (22) relié pivotant avec la cadre (34) fixe, par une articulation de pivotement (36),
caractérisé
en ce que le dispositif d'entraînement (12) est monté pivotant sur le vantail ou sur le cadre (34), avec axe de pivotement (38) parallèle à l'axe d'articulation de pivotement (32, 33), et en ce que les deux chaînes (16, 16') sont reliées de manière articulée au point de fixation (18, 18') respectif avec le cadre ou le vantail (22), avec axe d'articulation (26) commun également parallèle à l'axe d'articulation de pivotement (32).

6. Dispositif d'actionnement selon l'une des revendications précédentes,
caractérisé
en ce que les deux chaînes (16, 16') s'engagent l'une dans l'autre sur leurs faces arrières de manière que des forces dans la direction longitudinale (A) des chaînes puissent être transmises d'une chaîne (16, 16') à l'autre (16, 16').

7. Dispositif d'actionnement selon l'une des revendications précédentes,
caractérisé
en ce que les deux chaînes en position étirée entre les points de fixation (18, 18') et les points de sortie (62, 62') sont disposées décalées l'une par rapport à l'autre de la moitié de la longueur d'un maillon de chaîne (30, 30').

8. Dispositif d'actionnement selon la revendication 7,
caractérisé
en ce que les deux chaînes (16, 16') sont liées de façon pivotante aux deux points de fixation (l8, 18') avec chacune l'une de leurs extrémités sur le cadre ou le vantail (22), par un élément d'accouplement (20) du type d'une fourche, commun aux deux chaînes (16, 16').

9. Dispositif d'actionnement selon l'une des revendications précédentes,
caractérisé
en ce que les deux chaînes (16, 16') peuvent être entraînées chacune par une roue à chaîne (78, 78'), qui s'engage dans une portion de pliage de la chaîne (16, 16').

10. Dispositif d'actionnement selon l'une des revendications précédentes,
caractérisé
en ce que les deux roues à chaîne (78, 78') sont pourvues chacune d'un engrenage planétaire (120, 120') et en ce que les deux engrenages planétaires peuvent être entraînés par un moteur d'entraînement (80) commun.

11. Dispositif d'actionnement selon la revendication 9,
caractérisé
en ce que l'une uniquement des deux roues à chaîne est pourvue d'un engrenage planétaire, qui peut être entraîné par un moteur d'entraînement et en ce que l'autre roue à chaîne est accouplée avec une roue à chaîne.

12. Dispositif d'actionnement selon l'une des revendications 1 à 8,
caractérisé
en ce que l'une uniquement des deux roues à chaîne peut être entraînée par une roue à chaîne reliée à un moteur d'entraînement.

13. Dispositif d'actionnement selon l'une des revendications précédentes,
caractérisé
en ce que le dispositif d'entraînement (12) est autobloquant.

14. Dispositif d'actionnement selon la revendication 13, caractérisé par une transmission (82) autobloquante, de préférence un mécanisme à vis sans fin (112) autobloquant, entre un moteur d'entraînement (80) et un organe d'entraînement pour l'une des deux chaînes ou pour les deux chaînes (16, 16').

15. Dispositif d'actionnement selon l'une des revendications précédentes,
caractérisé
en ce que le dispositif d'entraînement (12) comporte au moins une partie (86, 86', 88, 88') en forme de plaque faite de préférence en matière plastique, avec un canal de guidage (90, 92) pour l'une des deux chaînes (16, 16').

16. Dispositif d'actionnement selon la revendication 15, caractérisé par deux parties (86, 88 ; 86', 88') en forme de plaques, superposées, dont les canaux (90, 92) alignés entre eux forment un canal de réception (84), entouré de tous côtés pour la chaîne (16, 16') respective.

17. Dispositif d'actionnement selon l'une des revendications précédentes,
caractérisé
en ce que l'engrenage planétaire (120, 120') comporte un porte-satellites (142) relié solidairement en rotation à la roue de chaîne (78, 78'), une roue planétaire reliée à une roue dentée d'entrée (160) ainsi qu'une denture périphérique intérieure (152), prévue dans un carter d'engrenage planétaire (156), des roues satellites (146), montées tournantes sur le porte-satellites (142) s'engageant dans la denture périphérique intérieure (152) ainsi que sur la denture de roue planétaire (158).

18. Dispositif d'actionnement selon la revendication 17,
caractérisé
en ce que la roue dentée d'entrée (118) est reliée à un mécanisme à vis sans fin (112), de préférence par un mécanisme intermédiaire à roue droite (122).

19. Dispositif d'actionnement selon la revendication 18,
caractérisé
en ce que la vis sans fin (116) du mécanisme à vis (120, 112) est montée solidairement en rotation sur un arbre moteur (114) d'un moteur d'entraînement (80).

20. Dispositif d'actionnement selon la revendication 19,
caractérisé
en ce que le mécanisme intermédiaire (122) ainsi que le carter d'engrenage planétaire (156) est placé entre deux plaques de base de transmission (136, 138).

21. Dispositif d'actionnement selon la revendication 20,
caractérisé
en ce que les plaques de base de transmission (136, 138) sont maintenues à distance l'une de l'autre par au moins trois tiges d'écartement (140).

22. Fenêtre ou volets d'aération, en particulier pour jardins d'hiver ou serres ou installation d'extraction de fumées ou de chaleur avec un dispositif d'actionnement (10) selon l'une des revendications précédentes.

23. Fenêtre oscillo-battante avec au moins un dispositif d'actionnement (10b, 10e) selon l'une des revendications précédentes.

24. Fenêtre oscillo-battante selon la revendication 23,
caractérisée
en ce que le dispositif d'actionnement (10b, 10e) est prévu pour l'ouverture et la fermeture oscillantes ou pour l'ouverture et la fermeture battantes et en ce que l'organe de transmission de force (14b) est liée de façon amovible au point de fixation (18b, 18e).
